# EUROPEAN PATENT SPECIFICATION

(11) **EP 3 927 144 B1**
(45) Date of publication and mention of the grant of the patent: **11.01.2023**
(21) Application number: 19820704.5
(22) Date of filing: 09.12.2019
(51) Int. Cl.: A01G 25/16

(54) **INDEPENDENT IRRIGATION CONTROLLER**
UNABHÄNGIGE BEWÄSSERUNGSSTEUERUNG
DISPOSITIF DE COMMANDE D'ARROSAGE INDÉPENDANT

(30) Priority: 22.02.2019 DE 102019001271
(43) Date of publication of application: 29.12.2021
(73) Proprietor: HUSQVARNA AB, 561 82 Huskvarna (SE)
(72) Inventor: RAUCH, Martin, 70191 Stuttgart (DE); WILK, Christian, 89079 Ulm (DE)
(74) Representative: Finkele, Rolf
(86) International application number: PCT/EP2019/084228
(87) International publication number: WO 2020/169231

(56) References cited:
- EP-A1- 3 108 747
- CN-U- 202 617 879
- DE-A1-102007 061 770
- US-A1- 2015 201 570

## Description

### TECHNICAL FIELD

The present disclosure relates to irrigation controllers. More specifically, the present disclosure relates to the irrigation controllers which find ubiquitous outdoor as well as indoor application on account of their enhanced installation options.

### BACKGROUND

Irrigation controllers find applications in outdoor setups to intelligently and independently irrigate a target flora such as plants, flowers and the like. With the advent of technology, the irrigation controllers have been designed to work with solar cells, making use of available renewable sources (solar radiation). However, there are certain constrains and issues which make integration of the solar cells with the irrigation controllers relatively cumbersome and complicated.

In some applications, the solar cells are independently provided and need to be additionally connected with the irrigation controllers with an additional cable connection. Alternatively, if the solar cells are integrally provided with body/unit of the irrigation controller, then there are complains of limited installation and setup possibilities. Such complaints become more prominent when the irrigation controllers need to be implemented or shifted among different installations such as terrace, balcony, floor, table, wall, pot, or guard rail.

An example of an irrigation controller is provided by EP 3,108,747 (hereinafter referred to as '747 reference). The '747 reference discloses a pumping device which includes a pump connectable to a pumping tube which can be immersed in a liquid tank to remove liquid, and a delivery tube connectable to one or more irrigation devices. Further, at least one rechargeable battery is used for supplying power to the pump and at least one solar panel for charging the rechargeable battery. Moreover, the pumping device has a manual controller, with rotary knobs, which is used to manually adjust the liquid volume to be delivered and the liquid dispensing frequency. However, the disclosed pumping device of the '747 reference has the rechargeable battery and the solar panel placed independently and remotely from the manual controller leading to a cumbersome and complex arrangement. This arrangement further constraints application of the pumping device where installations such as hanging and/or low-space setup of the manual controller is desired.

US 2015/201570 A1 discloses an irrigation controller according to the preamble of claim 1.

Thus, there is a need for improved irrigation controller with a simple, compact, and user-friendly arrangement suitable for various outdoor installations.

### SUMMARY

In view of the above, it is an objective of the present invention to solve or at least reduce the drawbacks discussed above. The objective is at least partially achieved by an irrigation controller. The irrigation controller includes a housing which integrates at least one control element. Further, the housing has a first section and a second section. The irrigation controller includes a pump operatively coupled with the irrigation controller. The irrigation controller includes a power supply for supplying power to the pump. And, the control element is configured with the pump. The irrigation controller is characterized in that the first section and the second section are angularly oriented towards each other at an angle less than 90 degrees. Thus, the present disclosure provides a simple, compact, installation-friendly irrigation controller which is compatible with various outdoor setups such as pots, rails, walls and the like.

According to an embodiment of the present invention, the second section includes a battery compartment which has at least one battery constituting the power supply. Presence of the battery compartment allows easy access to the battery for maintenance and the like.

According to an embodiment of the present invention, the second section includes a heft. This allows better balancing of the irrigation controller for its applications involving hanging with walls, pots, rails and the like.

According to an embodiment of the present invention, weight of the battery in the battery compartment provides stability when the irrigation controller is placed on the second section. This makes the irrigation controller suitable even for applications requiring setup of the irrigation controller on flat or level surfaces.

According to an embodiment of the present invention, the battery is charged by a solar cell. This will prove highly beneficial in outdoor application of the irrigation controller with an option of solar radiation based charging of the battery by the solar cell.

According to an embodiment of the present invention, the irrigation controller is attached to any of a pot, a guardrail, or a wall mounting. This is possible due to the angular orientation of the first section and the second section which provides "hook" shaped to the irrigation controller, as per the requirement.

According to the present invention, the irrigation controller has a hook-type shape. This shape makes it highly relevant for setups with flat surfaces (say table, ground, wall) or even with shapes confirming to pots, guardrails and the like.

According to an embodiment of the present invention, the control element is integrated with a rotary knob for adjusting liquid volume delivered by the pump. This allows user-friendly operation, for the liquid volume adjustments, from the irrigation control by use of the rotary knob.

According to an embodiment of the present invention, the control element is at least partially surrounded by the solar cell. This will provide structural and ergonomic benefits as will be evident to a person having knowledge in the art.

According to an embodiment of the present invention, the second section of the housing is provided with through holes. This is expected to provide ventilation and other benefits with application of the irrigation controller.

According to an embodiment of the present invention, the first section of the housing is provided with one or more visual indicators. The visual indicators can be audio/visual means such as, but not limited to, LED, LCD and the like to communicate any alert or other information to users.

According to an embodiment of the present invention, at least a transition region between the first section and the second section is formed with a transition cover. This transition cover can be a separate part attached to the housing or it can be integral to it, in particular by the use of a 2-component or multi-component molding technique. By this there the area of the transition cover exhibits a different friction coefficient, preferably a significant higher one, than the rest of the housing. Thus assisting the stability of a fixation of the irrigation controller to for example a hand rail or a pot.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a front perspective view of an irrigation controller, in accordance with an embodiment of the present invention;
**FIG. 2** shows a rear perspective view of the irrigation controller, in accordance with an embodiment of the present invention;
**FIG. 3** shows a side sectional view of the irrigation controller, in accordance with an embodiment of the present invention;
**FIG. 4** shows a side view of the irrigation controller, in accordance with an embodiment of the present invention;
**FIGS. 5A,** and **5B** show a perspective view of installations of the irrigation controller with a guardrail and a pot respectively, in accordance with another embodiment of the present invention; and
**FIG. 6** shows a perspective view of an outdoor system showing application of the irrigation controller, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

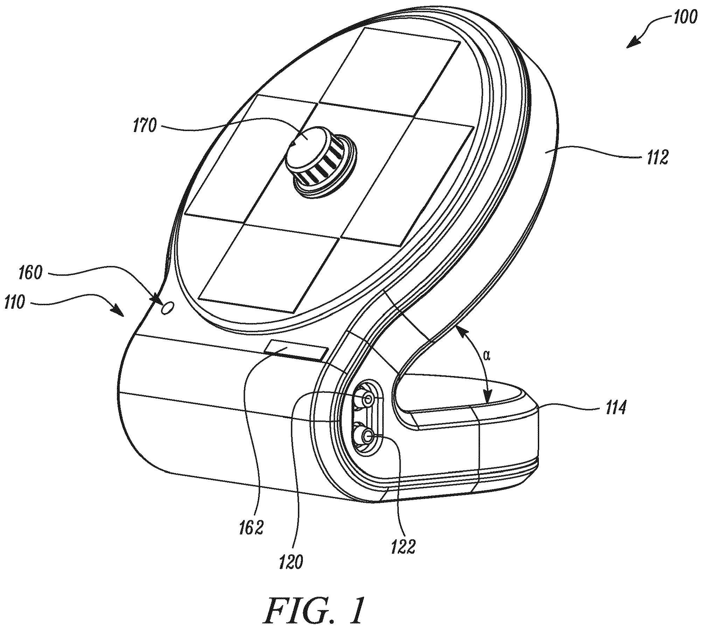

**FIG. 1** illustrates an irrigation controller **100.** The irrigation controller **100** includes a housing **110** which integrates at least one control element **170.** Further, the housing **110** has a first section **112** and a second section **114.** The irrigation controller **100** includes a pump (not shown) operatively coupled with the irrigation controller **100.** The irrigation controller **100** includes a power supply (alternatively, a battery **150)** for supplying power to the pump.

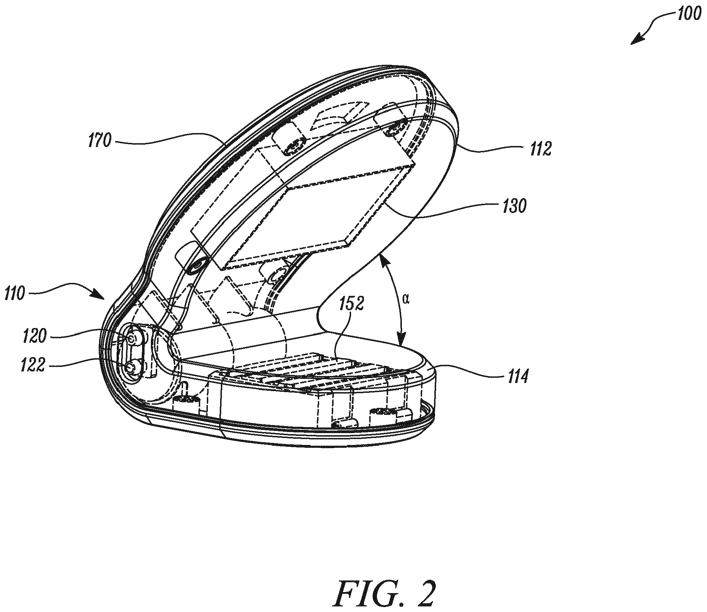

The battery **150** is charged by a solar cell **130** (shown in **FIG. 2****),** based on the solar radiation received by the solar cell **130.** The solar cell **130** may be any conventional type of solar cell known in the art, and the present disclosure is not limited by choice of type of the solar cell **130** in any manner. Further, a control element **170** is integrated with a rotary knob **170** and configured with the pump. The irrigation controller **100** may incorporate any other type of control element **170** as well which may be suited for application with various aspects of present disclosure such as push button, slider switch, selector switch, control lever etc. The present disclosure is not limited by choice of the control element **170** in any manner.

As illustrated, the first section **112** of the housing **110** is provided with one or more visual indicators. The visual indicators can be audio/visual means such as, but not limited to, LED **160,** LCD **162** and the like to communicate any alert or other information to users. The visual indicators may also communicate life/service call/status of the solar cell **130,** battery **150,** or any other component of the irrigation controller **100.**

In some embodiments, the control element **170** is at least partially surrounded by the solar cell **130.** This will provide structural and ergonomic benefits as will be evident to a person having knowledge in the art.

The irrigation controller **100** has the first section **112** and the second section **114** angularly oriented towards each other. The first section **112** and the second section **114** are angularly oriented at an angle (**α**). The angle (**α**) is illustrated as less than **90** degrees. Further, irrigation controller **100** has an inlet port **120** for accessing water from a source or reservoir (not shown) and an outlet port **122** to deliver the water to plants or other flora as per application requirements.

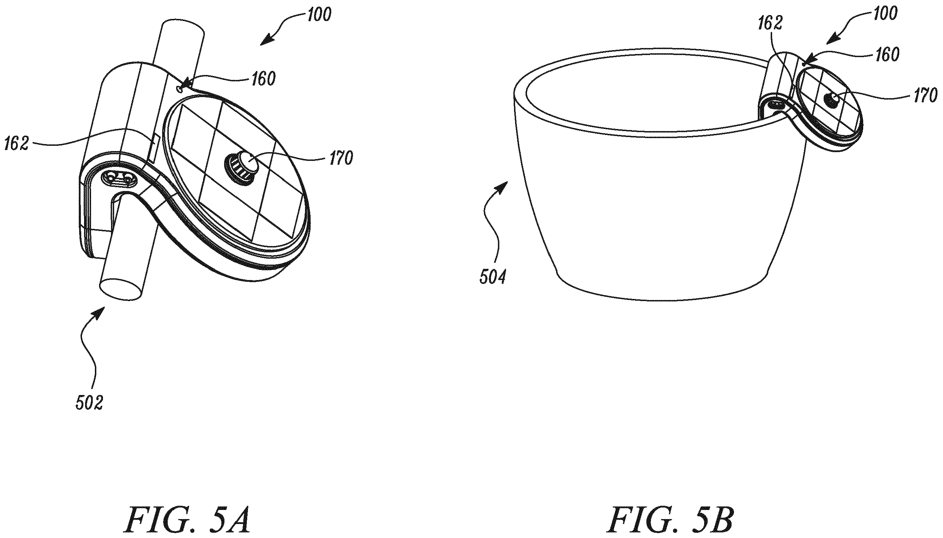

As used herein, the present disclosure refers to "angular orientation" between the first section **112** and the second section **114** leading to a hook-like shape/configuration of the irrigation controller **100** to serve multiple installation benefits. Such a shape/configuration makes the irrigation controller **100** compatible with garden units such as rails **502**, pots **504** (shown in **FIGS. 5A, and 5B**), walls, while at the same time being fit for setup on flat/level surfaces as well. Moreover, as will be evident to a person having knowledge in the art, the angle (**α**) between the first section **112** and the second section **114** may be any angle other than **90** degree and such choice of the angle (**α**) will be based on multiple factors such as shape/size/dimensions/number of the rails **502**, pots **504**, walls, and the like. Moreover, the shape/size/dimensions/weight/service life of the irrigation controller **100** are also expected to have a bearing on the choice of the angle (**α**) between the first section **112** and the second section **114.**

**FIG. 2** illustrates a rear perspective view of the irrigation controller **100,** in accordance with an embodiment of the present invention. The housing **110** is illustrated here in a transparent state from explanation considerations, the second section **114** includes a battery compartment **152** which has the battery **150.** Presence of the battery compartment **152** allows easy authorized access to the battery **150** for maintenance and the like. The battery compartment **152** also provides protection to the battery **150** from unauthorized intervention and environmental agents such as rain, dust, humidity and the like.

In some embodiments, the irrigation controller **100** may have multiple sections, which can be provided additionally to the first section **112** and the second section **114** as per application requirements. Presence of the multiple sections (say third or fourth section) will allow more diversified application of the irrigation controller **100** in some applications which may require multiple installation points, say with the multiple rails **502** or to suit different design of the pot **504.**

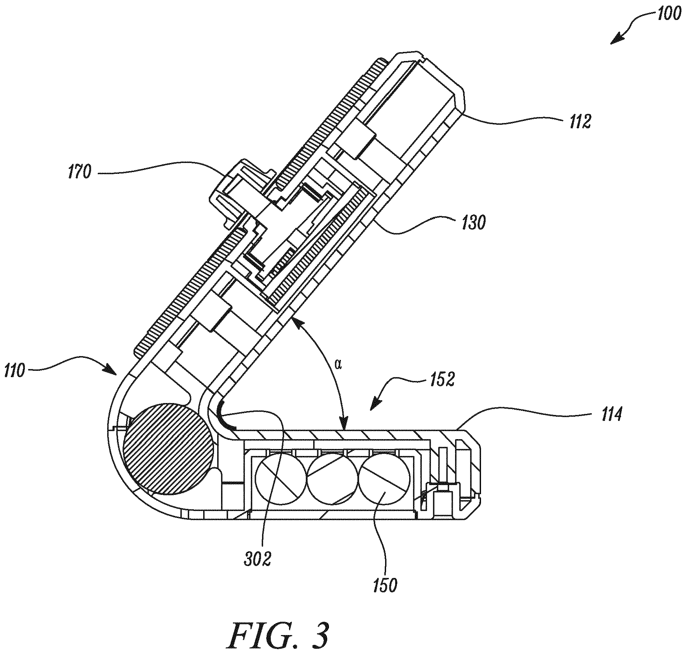

**FIG. 3** illustrates a side sectional view of the irrigation controller **100,** in accordance with an embodiment of the present invention. Weight of the batteries **150** in the battery compartment **152** provides stability when the irrigation controller **100** is placed on the second section **114.** This makes the irrigation controller **100** suitable even for applications requiring setup of the irrigation controller **100** on flat or level surfaces and also prevents undue toppling of the irrigation controller **100** in such setup. Further, the irrigation controller **100** includes a transition cover **302** located at least in the transition region between the first section **(112)** and the second section **(114).** This transition cover **(302)** can be a separate part attached to the housing or it can be integral to it, in particular by the use of a 2-component or multi-component molding technique. By this there the area of the transition cover exhibits a different friction coefficient, preferably a significant higher one, than the rest of the housing. Thus assisting the stability of a fixation of the irrigation controller to for example a hand rail or a pot. In a further embodiment the transition region between the first section **(112)** and the second section **(114)** is realized as a flexible and/or pivotable arrangement providing the ability to change the angle (**α**) between the first section **112** and the second section **114** up to a certain limit. In some embodiments, the irrigation controller **100** can be made of a material such as, but not limited to, a metal, rubber, polymer, plastics, or any other material as used or known in the art. Moreover, the irrigation controller **100,** and particularly the transition cover **302,** may be made of such a material (say rubber, polymers or any other elastic material) which allows limited change in the angle (**α**) between the first section **112** and the second section **114** of the irrigation controller **100.** More particularly, the angle (**α**) may be changed in a pre-defined range say ± 5 degrees to cater to dimensional requirement of any other guardrail **502,** pot **504,** and the like. Changes in the angle (**α**) may be provided in any other suitable ranges as well, and the present disclosure is not limited by any such angular ranges in any manner. This will make the irrigation controller **100** applicable for different installations without any need of changing the irrigation controller **100** or use of any additional element.

In some embodiments, the second section **114** includes a heft. Role of the heft can allow better balancing of the irrigation controller **100** for its applications involving hanging with walls (applicable in this orientation of **FIG. 3****),** the pot **504,** the rail **502** and the like. The heft may be highly applicable for applications involving different batteries such as, but not limited to, battery cells, pencil cells or any other battery as used or known in the art. In such cases, the heft may be used to optimally balance the irrigation controller **100** around the second section **114,** as shown in **FIG 3****.** Moreover, as shown in this configuration of the irrigation controller **100** where the first section **112** is making an angle of **45** degrees (other angles possible and well within the scope of the present disclosure) with second section **114,** there is better utilization of solar radiation to charge the solar cell **130,** among other implementation benefits.

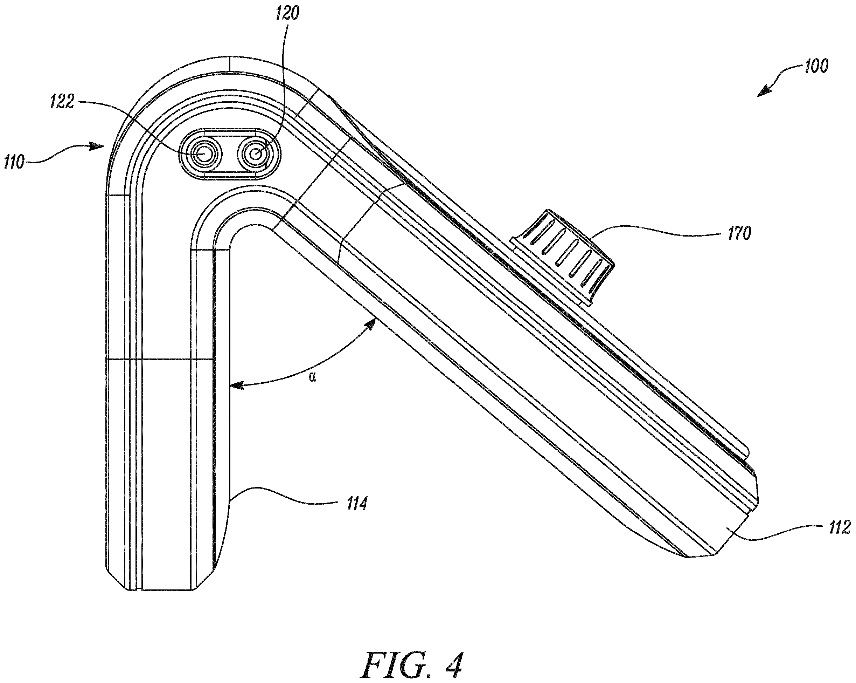

**FIG. 4** illustrates side view of the irrigation controller **100,** in accordance with an embodiment of the present invention. This view helps to highlight the hook-type shape of the irrigation controller **100.** This shape makes it highly relevant for setup with flat surfaces (say table, ground, wall) or even with shapes conforming to the pots **504,** guardrails **502** and the like, as illustrated in **FIGS. 5A,** and **5B****.** The present invention refers to the hook-type shape of the irrigation controller **100,** however other shapes such as, but not limited to, "U", "V", "A", "C" and even shapes "W", "X" (for configurations with the multiple sections as discussed earlier) have been contemplated and are well within the scope of the present disclosure.
In some embodiments, the second section **114** of the housing **110** is provided with through holes (not shown). This is expected to provide ventilation and other benefits with application of the irrigation controller **100.** Moreover, the irrigation controller **100,** as illustrated in FIG. 4, can be attached to a wall around the second section 114 by any attaching/holding means such as, but not limited to, contact tape, hanger, protrusion, holes, notch, among any other such means as used or known in the art.

**FIGS. 5A,** and **5B** illustrate some installations of the irrigation controller **100,** in accordance with another embodiment of the present invention. As illustrated, in accordance with various embodiments of the present invention, the irrigation controller **100** can be attached to the guardrail **502,** and the pot **504** respectively, although many more installations with balcony and garden features such as on wall, table, floor etc. are possible and well within the scope of the present disclosure. This is possible due to the angular orientation of the first section **112** and the second section **114** of the irrigation controller **100** as per the requirement. For example, as seen in **FIG. 5A****,** the hook-type shape defined between the first section **112** and the second section **114** allows the guardrail **502** in between and provides an anchor point for the irrigation controller **100** to hang upon. Similarly, as shown in **FIG. 5B****,** a periphery of the pot **504** acts as an anchor point.

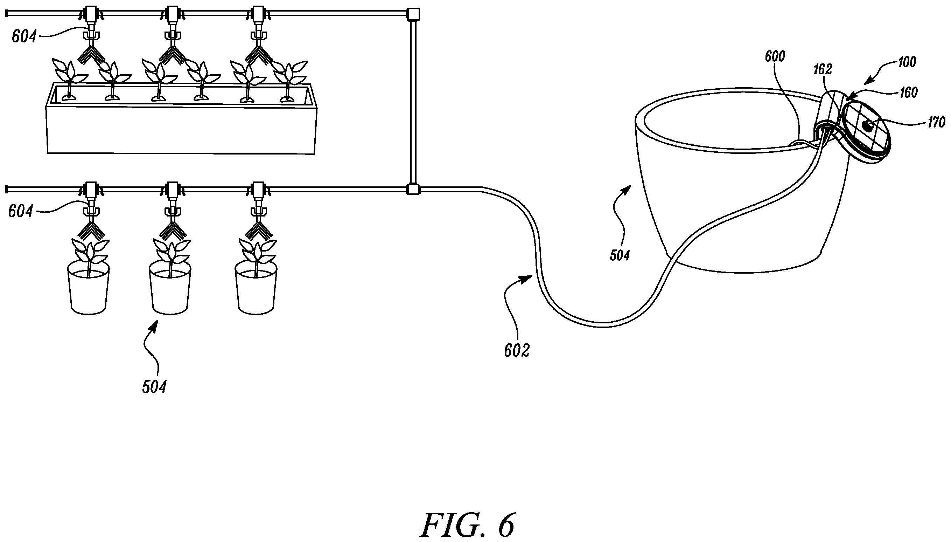

**FIG. 6** illustrates an outdoor system showing application of the irrigation controller **100,** in accordance with an embodiment of the present invention. The irrigation controller **100** is illustrated here attached to the pot **504,** where the irrigation controller **100** has an inlet hose **600** associated with the inlet port **120** to access the water from the pot **504,** and an outlet hose **602** associated with the outlet port **122.** Further, the outlet hose **602** reaches to different plants in the corresponding pots **504** to deliver the water by means of different drippers **604** provided at ends of the outlet hose **602.**

As explained earlier, the control element **170** is integrated with the rotary knob **170** for adjusting liquid volume, for example via time controlled programs, delivered by the pump. This allows user-friendly operation (for the liquid volume adjustments) of the irrigation control by use of the rotary knob **170.** Moreover, application of the rotary knob **170** allows users to override automatic and/or weather condition based working of the irrigation controller **100** since the weather condition is generally expected to have a bearing on charging of the battery **150** by the solar panel **130** (say due to change in solar radiation). Thus, the present disclosure provides a simple, compact, and user-friendly irrigation controller **100** which is compatible for installation with various outdoor setups such as pots **504,** rail **502,** walls and the like.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Irrigation controller
- **110**: Housing
- **112**: First Section
- **114**: Second Section
- **120**: Inlet Port
- **122'**: Outlet Port
- **130**: Solar Cell
- **150**: Power Supply/Battery
- **152**: Battery Compartment
- **160**: LED
- **162**: LCD
- **170**: Control Element/Rotary Knob
- **302**: Transition Cover
- **502**: Guardrail
- **504**: Pot
- **600**: Inlet Hose
- **602**: Outlet Hose
- **604**: Dripper
- **α**: Angle between the first section and the second section

## Claims

1. An irrigation controller **(100)** comprising:
a housing **(110)** which integrates at least one control element **(170),** wherein the housing **(110)** has a first section **(112)** and a second section **(114);**
a pump configured to be operatively coupled with the irrigation controller **(100);**
a power supply**(150)** for supplying power to the pump; and
the control element **(170)** configured with the pump;
the first section **(112)** and the second section **(114)** are angularly oriented towards each other at an angle (**α**) less than **90** degrees;
**characterized in that:**
the irrigation controller **(100)** has a substantially hook-type shape.

2. The irrigation controller **(100)** of claim **1,** wherein the second section **(114)** includes a battery compartment **(152)** which has at least one battery **(150)** constituting the power supply **(150).**

3. The irrigation controller **(100)** of claim **1 or 2,** wherein the second section **(114)** includes a heft.

4. The irrigation controller **(100)** of claim 2,
wherein weight of the battery **(150)** in the battery compartment **(152)** provide stability when the irrigation controller **(100)** is placed on the second section **(114).**

5. The irrigation controller **(100)** of claims 2 and 4,
wherein the battery **(150)** is charged by a solar cell **(130).**

6. The irrigation controller **(100)** of any of the preceding claims,
wherein the irrigation controller **(100)** is attached to any of a pot **(504),** a guardrail **(502),** or a wall mounting.

7. The irrigation controller **(100)** of any of the preceding claims,
wherein the control element **(170)** is integrated with a rotary knob **(170)** for adjusting liquid volume delivered by the pump.

8. The irrigation controller **(100)** of claim **5** and **7,** wherein the control element **(170)** is at least partially surrounded by the solar cell **(130).**

9. The irrigation controller **(100)** of any of the preceding claims,
wherein the second section **(114)** of the housing **(110)** is provided with through holes.

10. The irrigation controller **(100)** of any of the preceding claims, wherein the first section **(112)** of the housing **(110)** is provided with one or more visual indicators.

11. The irrigation controller **(100)** of any of the preceding claims, wherein at least a transition region between the first section **(112)** and the second section **(114)** is formed with a transition cover **(302).**

## Patentansprüche

1. Eine Bewässerungssteuergerät (100), die Folgendes umfasst:
ein Gehäuse (110), das mindestens ein Bedienelement (170) integriert hat, wobei das Gehäuse (110) einen ersten Abschnitt (112) und einen zweiten Abschnitt (114) aufweist;
eine Pumpe, die so ausgebildet ist, dass sie operativ mit der Bewässerungssteuerung (100) gekoppelt ist;
eine Stromversorgung (150) zum Zuführen von Strom zu der Pumpe;
und das Bedienelement (170) mit der Pumpe ausgebildet ist; der erste Abschnitt (112) und der zweite Abschnitt (114) winklig zueinander in einem Winkel (α) von weniger als 90 Grad ausgerichtet sind;
**dadurch gekennzeichnet, dass**
das Bewässerungssteuergerät (100) eine im Wesentlichen hakenartige Form aufweist.

2. Das Bewässerungssteuergerät (100) nach Anspruch 1, wobei der zweite Abschnitt (114) ein Batteriefach (152) enthält, das mindestens eine Batterie (150) aufweist, die die Stromversorgung (150) bildet.

3. Das Bewässerungssteuergerät (100) nach Anspruch 1 oder 2, wobei der zweite Abschnitt (114) ein Gewicht aufweist.

4. Das Bewässerungssteuergerät (100) nach Anspruch 2, wobei das Gewicht der Batterie (150) im Batteriefach (152) für Stabilität sorgt, wenn das Bewässerungssteuergerät (100) auf dem zweiten Abschnitt (114) gelegt wird.

5. Das Bewässerungssteuergerät (100) nach Anspruch 2 und 4, wobei die Batterie (150) durch eine Solarzelle (130) geladen wird.

6. Das Bewässerungssteuergerät (100) nach einem der vorhergehenden Ansprüche, wobei das Bewässerungssteuergerät (100) an einem Topf (504), einem Geländer (502) oder einer Wandhalterung angebracht ist.

7. Das Bewässerungssteuergerät (100) nach einem der vorhergehenden Ansprüche, wobei das Bedienelement (170) mit einem Drehknopf (170) zur Einstellung der von der Pumpe geförderten Flüssigkeitsmenge integriert ist.

8. Das Bewässerungssteuergerät (100) nach Anspruch 5 und 7, wobei das Bedienelement (170) zumindest teilweise von der Solarzelle (130) umgeben ist.

9. Das Bewässerungssteuergerät (100) nach einem der vorhergehenden Ansprüche, wobei der zweite Abschnitt (114) des Gehäuses (110) mit Durchgangslöchern versehen ist.

10. Das Bewässerungssteuergerät (100) nach einem der vorhergehenden Ansprüche, wobei der erste Abschnitt (112) des Gehäuses (110) mit einem oder mehreren optischen Indikatoren versehen ist.

11. Das Bewässerungssteuergerät (100) nach einem der vorhergehenden Ansprüche, wobei zumindest der Übergangsbereich zwischen dem ersten Abschnitt (112) und dem zweiten Abschnitt (114) mit einer Übergangsabdeckung (302) ausgebildet ist.

## Revendications

1. Contrôleur d'irrigation (100) comprenant :
un boîtier (110) qui intègre au moins un élément de commande (170), dans lequel le boîtier (110) a une première section (112) et une seconde section (114) ;
une pompe configurée pour être couplée de manière opérationnelle avec le contrôleur d'irrigation (100) ;
une alimentation électrique (150) pour fournir de l'énergie à la pompe ; et l'élément de commande (170) configuré avec la pompe ;
la première section (112) et la seconde section (114) sont orientées angulairement l'une vers l'autre selon un angle (a) inférieur à 90 degrés ;
**caractérisé en ce que** :
le contrôleur d'irrigation (100) a une forme sensiblement de type crochet.

2. Contrôleur d'irrigation (100) selon la revendication 1, dans lequel la seconde section (114) comprend un compartiment à piles (152) qui a au moins une pile (150) constituant l'alimentation électrique (150).

3. Contrôleur d'irrigation (100) selon la revendication 1 ou 2, dans lequel la seconde section (114) comprend un poids.

4. Contrôleur d'irrigation (100) selon la revendication 2, dans lequel le poids de la pile (150) dans le compartiment à piles (152) assure la stabilité lorsque le contrôleur d'irrigation (100) est placé sur la seconde section (114).

5. Contrôleur d'irrigation (100) selon les revendications 2 et 4, dans lequel la pile (150) est chargée par une cellule solaire (130).

6. Contrôleur d'irrigation (100) selon l'une quelconque des revendications précédentes, dans lequel le contrôleur d'irrigation (100) est fixé à l'un quelconque d'un pot (504), d'un garde-corps (502), ou d'un montage mural.

7. Contrôleur d'irrigation (100) selon l'une quelconque des revendications précédentes, dans lequel l'élément de commande (170) est intégré à un bouton rotatif (170) pour régler le volume de liquide fourni par la pompe.

8. Contrôleur d'irrigation (100) selon les revendications 5 et 7, dans lequel l'élément de commande (170) est au moins partiellement entouré par la cellule solaire (130).

9. Contrôleur d'irrigation (100) selon l'une quelconque des revendications précédentes, dans lequel la seconde section (114) du boîtier (110) est pourvue de trous traversants.

10. Contrôleur d'irrigation (100) selon l'une quelconque des revendications précédentes, dans lequel la première section (112) du boîtier (110) est pourvue d'un ou plusieurs indicateurs visuels.

11. Contrôleur d'irrigation (100) selon l'une quelconque des revendications précédentes, dans lequel au moins une région de transition entre la première section (112) et la seconde section (114) est formée avec un couvercle de transition (302).
